# EUROPEAN PATENT APPLICATION

(11) **EP 4 681 800 A1**
(43) Date of publication of application: **21.01.2026**
(21) Application number: 25176435.3
(22) Date of filing: 14.05.2025
(51) Int. Cl.: B01D 53/18, B01D 53/02, B01D 53/047

(54) **CO2 ABSORBENT INFUSED SOLID**

(30) Priority: 14.05.2024 GB 202406783; 14.05.2024 GB 202406793; 13.05.2025 AU 2025203429
(71) Applicant: Sagentia Ltd, Cambridgeshire CB22 7GG (GB); Cohen, Mark Joseph, Cambridge CB22 7GG (GB)
(72) Inventor: MARK JOSEPH, COHEN, CAMBRIDGE, CB22 7GG (GB); POTTER, ANDREW ROBERT, CAMBRIDGE, CB22 7GG (GB); BYRNE, LOUISE ANNE, CAMBRIDGE, CB22 7GG (GB); LOWDELL, CHRISTOPHER, CAMBRIDGE, CB22 7GG (GB)
(74) Representative: Mathys & Squire

(57) **Abstract**

The present invention relates to an absorber element comprising a macro-porous solid support wherein the macro-porous solid support is suitable for infusion with a liquid absorbent such that the liquid absorbent forms a stable film on at least part of the interior surfaces of the macropores. In one aspect, the present invention relates to an absorber element comprising a macro-porous solid support, wherein the macro-porous solid support comprises a surface roughness that is infused with a liquid absorbent such that the liquid absorbent forms a stable film on at least part of the interior surfaces of the macropores.

## Description

### FIELD OF THE INVENTION

The present invention relates to an absorber element comprising a macro-porous solid support wherein the macro-porous solid support comprises a surface roughness that is suitable for infusion with a liquid absorbent such that the liquid absorbent forms a stable film on at least part of the interior surfaces of the macropores. In particular, the present invention relates to an absorber element, an absorption/desorption tank containing an absorber element, an air purification circuit comprising the absorption/desorption tank, and a system comprising one or more air purification circuit, as well as methods of using said system, methods of retrofitting said circuit or system into a submarine, and a submarine comprising the above absorber element, absorption/desorption tank, circuit, or system.

### BACKGROUND OF THE INVENTION

In a submarine environment, it is critical to remove carbon dioxide (CO₂) from the atmospheric air to ensure the safety and wellbeing of the submarine crew. Current systems rely on direct liquid-air contactors where CO₂ from the air dissolves into the absorber liquid Although current technology is proven, atmospheric quality in submarines is usually suboptimal with higher than desired levels of CO₂. Therefore, there is a need for improved CO₂ scrubbing technologies to reduce the level of ambient CO₂, particularly for long duration submarine voyages.

Although current technology is proven, atmospheric quality in submarines is usually suboptimal with higher than desired levels of CO₂. Therefore, there is a need for improved CO₂ scrubbing technologies to reduce the level of ambient CO₂, particularly for long duration submarine voyages.

It is an object of this invention to provide a technology which is more effective at removing CO₂ from the atmosphere than the existing legacy technologies stated above. Whilst the primary use of this invention is for CO₂ removal from air, it may be used to remove other pollutants, the term "pollutants" as used herein includes CO₂.

It is a further object of this invention to provide an improved CO₂ scrubbing technology which can be retrofitted to existing submarine atmospheric control systems.

Depending on the active chemistry used, the CO₂ binding process may be absorption, adsorption, dissolution or other molecular process. For the purposes of simplicity, this document will refer to absorption, however this should not be read as limiting the document to this specific process as the principles of the invention apply to any molecular process.

Liquid amine systems are commonly used as the CO₂ capture liquid. A disadvantage of this approach is that due to the large volumes of air used in gas-liquid contactor modules, some amine is entrained into the exiting air flow. This results in both operation inefficiencies due to loss of active chemistry and safety concerns regarding airborne amine re-entering the breathable atmosphere. As such, complex return air filtration systems need to be installed to re-capture this lost amine. These filtration systems are bulky, require energy and additional maintenance.

A key to any volume-efficient gas-liquid contactor system is that a large gas-liquid interface is produced and maintained. This is usually done by bubbling the gas, spraying the liquid or by cascading the liquid over a structure to break up the liquid bulk and allow gas access. Effective contactors function by creating more interfacial liquid surface area, however the creation of this surface area comes at an energy cost. It takes energy to create the bubbles or droplets - provided via pumps, compressors, or motorised mechanical agitators. In a submarine environment, energy usage can be critical to operations and excess energy usage should be eliminated.

When removing background levels of CO₂ from air, the initial concentrations of CO₂ are around 0.5%. However, when creating the interface to enable good gas-liquid contacting, this must be done for all the air, despite only a small fraction being of interest to the reaction. Therefore, the energy costs associated with the creation of the interface apply to the entire air stream, despite 99.5% of the stream being of no interest to the process. This high proportion of 'spectator molecules' in the gas stream then exacerbate the chances of reactant liquid entrainment in the clean air outflow, as a very high volume of air is required.

One solution to limit the amount of amine escape is to formulate the CO₂ capture solution to have a low vapour pressure, reducing the chance of entrainment. However this approach can result in an increase of solution viscosity, which increases the energy demand for producing the gas-liquid interface.

One solution to prevent amine escape, is to use ionic liquids as the CO₂ absorber chemistry as an alternative to liquid amines. Ionic liquids have low volatility, preventing loss of active chemistry.

A challenge with the use of ionic liquids in a traditional gas-liquid contractor system is the high initial viscosity of ionic liquids which increases with the absorption of CO₂. This higher viscosity increases the energy cost further.

CO₂ absorbent infused solids have been described in UK patent applications GB2406783.7 and GB2406793.6 the entirety of which are incorporated by reference herein.

### SUMMARY OF THE INVENTION

This invention involves the use of thin liquid films of active CO₂ absorbing/desorbing material (such as liquid amines or ionic liquids) coated onto a three-dimensional macro-porous solid scaffold. CO₂-rich gas to be treated can flow through the macro-pores and react directly at the high-surface area liquid film. Once the liquid is saturated, the absorber chamber can be switched to desorb mode for extraction of the CO₂.

One advantage of this invention is that it allows for the maintenance of a permanent high-surface area 'structure' for the active liquid chemistry, reducing the demand for pumps and motors used to create gas-liquid interfaces in standard liquid systems.

A second advantage of this invention is that high-viscosity, low vapour pressure CO₂ absorbing/desorbing formulations (such as liquid amine or ionic liquid formulations) can be employed to reduce active chemistry escape into the clean air output. The static nature of the liquid films mean that on-site flow of the liquids is not necessary. This results in a reduction of the amount of additional output filtration equipment necessary for operation, saving space and energy.

In a first aspect, the present invention provides an absorber element comprising a macro-porous solid support, wherein the macro-porous solid support comprises a surface roughness that is infused with a liquid absorbent such that the liquid absorbent forms a stable film on at least part of the interior surfaces of the macropores.

In a second aspect, the present invention provides an absorption/desorption tank suitable for use in an air purification circuit, containing an absorber element comprising a macro-porous solid support wherein the macro-porous solid support comprises a surface roughness that is suitable for infusion with a liquid absorbent such that the liquid absorbent may form a stable film on at least part of the interior surfaces of the macropores, wherein the absorption/desorption tank comprises at least one aperture.

In a third aspect, the present invention provides an air purification circuit comprising: a) an absorption/desorption tank as defined herein; b) a pollutant outlet, a clean air outlet, and an inlet; and c) one or more valves which allow fluid communication between the absorption/desorption tank and each one of the inlet, the pollutant outlet, and the clean air outlet to be either opened or closed.

In a fourth aspect, the present invention provides a system comprising a plurality of air purification circuits as defined herein, the system comprising: a common pollutant outlet, a common clean air outlet, and a common inlet; wherein the pollutant outlet, clean air outlet, and inlet of each circuit are suitable for fluid communication with the common pollutant outlet, the common clean air outlet, and the common inlet, respectively.

In a fifth aspect, the present invention provides a method of removing pollutants, such as CO₂, from air using a system as defined herein, wherein each air purification circuit is operated in one of the following modes:
a) absorption flow through mode: wherein fluid communication from the common inlet to the absorption/desorption tank is open; fluid communication from the absorption/desorption tank to the common clean air outlet is open; and fluid communication from the absorption/desorption tank to the common pollutant outlet is closed;
b) desorption mode: wherein fluid communication from the common inlet to the absorption/desorption tank is closed; fluid communication from the absorption/desorption tank to the common clean air outlet is closed; and fluid communication from the absorption/desorption tank to the common pollutant outlet is open;
c) absorption mode: wherein fluid communication from the common inlet to the absorption/desorption tank is open; fluid communication from the absorption/desorption tank to the common clean air outlet is closed; and fluid communication from the absorption/desorption tank to the common pollutant outlet is closed; or
d) clean air discharge mode: wherein fluid communication from the common inlet to the absorption/desorption tank is closed; fluid communication from the absorption/desorption tank to the common clean air outlet is open; and fluid communication from the absorption/desorption tank to the common pollutant outlet is closed.

In a sixth aspect, the present invention provides a method of retrofitting a circuit as defined herein, or a system as defined herein, into a submarine atmospheric control system.

In a seventh aspect, the present invention provides a submarine comprising one or more absorber element as defined herein, one or more absorption/desorption tank as defined herein, one or more circuit as defined herein, or one or more system as defined herein.

### BRIEF DESCRIPTION OF THE FIGURES

Figure 1 shows a system comprising two air purification circuits, A-circuit and B-circuit. The A-circuit is in absorption flow through mode and the B-circuit is in desorption mode.
Figure 2 shows the system from Figure 1 with the B-circuit in absorption flow through mode and the A-circuit in desorption mode.
Figure 3 shows a conceptual illustration of a macro-pore within an absorber module.
Figure 4 shows a system comprising three interconnected air purification circuits.
Figure 5 shows an alternative system comprising three interconnected air purification circuits.
Figure 6 shows a further alternative system comprising three interconnected air purification circuits.

### DETAILED DESCRIPTION OF THE INVENTION

In a first aspect, the present invention provides an absorber element comprising a macro-porous solid support, wherein the macro-porous solid support comprises a surface roughness that is infused with a liquid absorbent such that the liquid absorbent forms a stable film on at least part of the interior surfaces of the macropores.

In the context of the present invention the term "surface roughness" refers to the quality of a surface of not being smooth, and is related to the spatial variability structure of the surface, and inherently it is a multiscale property. In the context of the present invention, surface roughness means that the surface is able to retain a liquid, such as a liquid absorbent as defined herein, by capillary action and Van der Waal's forces. This situation is described in the present application as the surface roughness being "infused" with said liquid. The exact dimensions of "surface roughness" required to retain a liquid absorbent as defined herein will depend on the exact nature of the liquid absorbent. Typically, the surface roughness has a roughness ISO grade number of from N5 to N8, preferably from N6 to N7.

In the context of the present invention, the term "macro-porous" refers to the property of having cavities that are larger than 75 micrometres in diameter. Cavities of this size are well suited to allowing the flow of air through the macro-porous solid support. For example, the macro-porous solid support may comprise cavities ranging from 75 micrometres to 1 millimetre, preferably from 75 micrometres to 500 micrometres, more preferably from 75 micrometres to 250 micrometres.

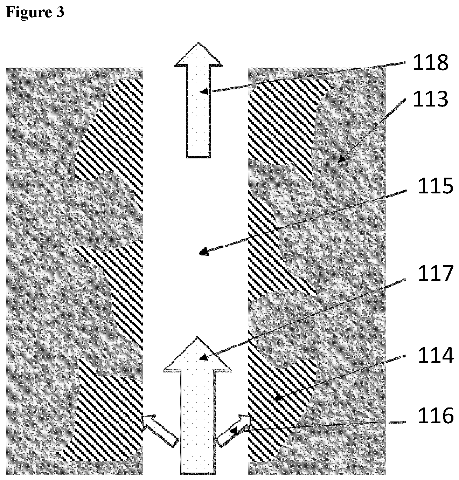

The macropores comprise surface roughness on their interior. This allows for their interior surface to be infused with liquid absorbent. This situation is depicted in Figure 3.

The macropores may form passageways through the solid support which allows for the flow of air through the passageways. A passageway may therefore be a macro-pore having a cavity which is open to the outside environment in two places. This allows for greater contact between the air to be purified and the liquid absorbent. An example of a macropore forming a passageway is depicted in Figure 3. Larger passageways may also exist in the macro-porous solid support which may further comprise macropores within the inner surface of the passageway.

The macro-porous solid support may be made of any solid material so long as it has a macro-porous structure, suitable surface roughness, and is chemically compatible with the absorber material. The macro-porous solid support may be inherently macro-porous, for example the macro-porous solid support may comprise diatomaceous earth. Examples of inherently macro-porous materials suitable for use in the macro-porous support include pumice, biochar, sandstone, macroporous silica, macroporous polymers, aerogels, foamed ceramics, polyurethane foams, sponge, diatomaceous earth, or combinations thereof.

Alternatively or additionally, the macro-porous solid support comprises manufactured porosity, for example the manufactured porosity may be derived from 3D printing, subtractive manufacturing, foaming processing, a packed bed structure, chemical etching, physical etching, and/or thermal activation.

For example, the macro-porous solid support may comprise inherent macro-porosity or manufactured macro-porosity on one or more of its outer surfaces, preferably on all of its outer surfaces. Maximising the surface area of the macro-porous phase will increase the surface area of the liquid absorbent film and thus maximise the interface between the liquid absorbent film and the air stream to be purified.

The macro-porous solid support may comprise inherent or manufactured surface roughness. Manufactured surface roughness may be added to a solid support by chemical etching, physical etching, thermal activation, or other similar methods that are known to the skilled person. Materials such as metals or ceramics formed from sintered powders will inherently have suitable surface roughness.

The macro-porous solid support may be made of, or comprise, an electrical conductor. This means that the macro-porous solid support may act as an electrode or an electrical heating element suitable for heating the liquid absorbent. The macro-porous solid support may further comprise electrical circuitry suitable for connection with a source of electrical energy. A submarine will typically already have a source of electrical energy on board which may be utilised for this purpose.

For example, the macro-porous solid support may have a shape or 3D structure that increases its surface area such as a honeycomb structure, an open-cell foam, a 3D lattice, a gyroid structure, a mesh or grid structure, a packed bed structure, numerous beads, or a structure having fins, finned tubes, or multiple plates. Various structures are used for example in heat exchangers or catalysts which are designed to maximise surface area in contact with air, the preparation of such structures would be within capability of the skilled person.

The surface roughness of the macro-porous solid support is infused with a liquid absorbent and may be held in place by capillary action. This means that liquid absorbent is retained on the outer surface of the solid support, as well as inside the macropores, such that the liquid absorbent forms a stable film on at least part of the interior surfaces of the macropores. This causes part of, and preferably all of the large surface area of the macro-porous solid support to be covered with a stable film of liquid absorbent.

In some examples, the macro-porous solid support is a hydrophobic material, or is coated with a hydrophobic material, as would be appreciated, this embodiment will only be compatible with lipophilic liquid absorbents and not aqueous liquid absorbents.

The size of the macro-pores, the surface roughness of the macro-porous solid support and the viscosity of the liquid absorbent can each be fine tuned in order to provide the optimal conditions for forming a stable film on at least part of the interior surfaces of the macropores. The viscosity of the liquid absorbent may be adjusted, for example, using a viscosity increasing additive. The size of the macro-pores and the surface roughness of the macro-porous solid support may also be optimised for a given type or species of liquid absorbent. Fine tuning these properties as is necessary would be within the capabilities of the skilled person.

Any suitable liquid absorbent may be used so long as it is capable of absorbing and subsequently desorbing pollutants, such as CO₂ from air. Two suitable liquid absorbents are liquid amines and ionic liquids, both of these liquid absorbents are well suited to absorbing CO₂.

The liquid absorbent may be a liquid amine. The liquid amine may be selected from monoethanolamine (MEA), diethanolamine (DEA), triethanolamine (TEA), methyldiethanolamine (MDEA), piperazine (PZ), diglycolamine (DGA), diisopropanolamine (DIPA), 2-amino-2-methyl-1-propanol (AMP), n-methyl-1,3-propane diamine (MPDA), ethylaminopropylamine (EAPA), n-methyldiethanolamine (MDEA), tetraethylenepentamine (TEPA), hexamethylenediamine (HMDA), ethylenediamine (EDA), n,n-dimethylcyclohexylamine (DMCA), propanolamine (PA), butylethanolamine (BEA), n-acetylethanolamine (NAE) or combinations thereof. The liquid amine may be neat or may be dissolved in any suitable solvent, such as water. The use of a solvent may also adjust the viscosity and/or surface tension properties of the liquid amine as is required for forming a for forming a stable film on at least part of the interior surfaces of the macropores.

The liquid absorbent may be an ionic liquid. The ionic liquid may be a 1,3-dialkyl imidazolium salt, for example a 1,3-dialkyl imidazolium salt selected from [1,3-dialkyl imidazolium]⁺[BF₄]⁻, [1,3-dialkyl imidazolium]⁺ [(CF₃SO₂)₂N]⁻, or [1,3-dialkyl imidazolium]⁺[Acetate]⁻, preferably selected from [1-butyl-3-methylimidazolium]⁺[BF₄]⁻, [1-butyl-3-methylimidazolium]⁺ [(CF₃SO₂)₂N]⁻, [1-butyl-3-methylimidazolium]⁺[Acetate]⁻, [1-butyl-3-methylimidazolium]⁺[BF₄]⁻, [1-butyl-3-methylimidazolium]⁺ [(CF₃SO₂)₂N]⁻, or [1-butyl-3-methylimidazolium]⁺[Acetate]⁻. The ionic liquid may be an amino functionalised ionic liquid, for example, an amino functionalised ionic liquid selected from an amino functionalised 1,3-dialkyl imidazolium salt of [BF₄]⁻, [(CF₃SO₂)₂N]⁻, or [Acetate]⁻. The ionic liquid may be a pyridinium amino acid salt, such as pyridinium glycinate. The ionic liquid may be a choline amino acid salt, such as choline glycinate. The ionic liquid may be a mixture of one or more of the above listed ionic liquids.

The liquid absorbent may be a mixture of liquid amine and an ionic liquid. For example, the liquid absorbent may comprise a combination of one or more of the above listed liquid amines, and one or more of the above listed ionic liquids.

In a second aspect, the present invention provides an absorption/desorption tank suitable for use in an air purification circuit, containing an absorber element comprising a macro-porous solid support wherein the macro-porous solid support comprises a surface roughness that is suitable for infusion with a liquid absorbent such that the liquid absorbent may form a stable film on at least part of the interior surfaces of the macropores, wherein the absorption/desorption tank comprises at least one aperture.

The absorption/desorption tank may be any container suitable for containing the absorber element and for allowing an airflow to flow from an inlet provided by an aperture, across the absorber element, and out of an outlet provided by an aperture. The absorption/desorption tank may may be made of any suitable material, for example metal, plastic, or ceramic.

As would be appreciated, in the context of the present invention, an "inlet" is an opening into which air to be purified may flow. As would be appreciated, in the context of the present invention, an "outlet" is an exit out of which purified air, or a pollutant stream may flow. The absorption/desorption tank requires at least one aperture that may act as an inlet for airflow so that air to be purified may enter. The absorption/desorption tank requires at least one aperture that may act as an outlet for airflow so that purified air and desorbed pollutants, such as CO₂ may exit. A single aperture may act as a shared inlet/outlet. The at least one aperture provides an inlet and an outlet. The absorption/desorption tank may comprise one aperture which can act as a shared inlet/outlet, or the absorption/desorption tank may comprise two or more apertures. Typically, the absorption/desorption tank comprises three apertures. In the case that the absorption/desorption tank comprises three apertures, typically one aperture provides an inlet for air to be purified, and two apertures provide two outlets, for example where one aperture is a pollutant outlet and another aperture is a clean air outlet. The absorption/desorption tank may further comprise additional apertures which may act as inlets and/or outlets, where the tank is suitable for use in more complex systems.

The absorber element comprising a macro-porous solid support may be located at any suitable position within the absorption/desorption tank, for example the absorber element comprising a macro-porous solid support may be disposed around the part of or all of the inner surface of the absorption/desorption tank. The absorption/desorption tank may comprise one or more absorber element comprising a macro-porous solid support as defined herein.

The absorption/desorption tank may further comprise a mechanism to encourage or disrupt airflow across or through the absorber element, for example a fan or baffles within absorption/desorption tank.

The absorber element comprising the macro-porous solid support may be as defined in the first aspect, or in any embodiment described in relation thereto. Whilst the macro-porous solid support comprises a surface roughness that is suitable for infusion with a liquid absorbent such that the liquid absorbent may form a stable film on at least part of the interior surfaces of the macropores, in the second aspect it is optional that the liquid absorbent is present. The liquid absorbent may be as defined in the first aspect, or any embodiment described in relation thereto. As liquid absorbents, such as liquid amines, may be hazardous, it is useful that the liquid absorbent may be infused onto the macro-porous solid support only when necessary, i.e. prior to use. Whereas the macro-porous solid support may be stored and/or transported prior to infusion of the liquid absorbent.

In a third aspect, the present invention provides an air purification circuit comprising: a) an absorption/desorption tank as defined herein; b) a pollutant outlet, a clean air outlet, and an inlet; and c) one or more valves which allow fluid communication between the absorption/desorption tank and each one of the inlet, the pollutant outlet, and the clean air outlet to be either opened or closed.

Whilst the primary use of the air purification circuit is for CO₂ removal from air, it may be used to remove other pollutants, the term "pollutants" as used herein includes CO₂. The term "air purification" is understood to include the removal of pollutants, such as CO₂.

The absorption/desorption tank is as defined in the second aspect, or in any embodiment relating thereto. As such, the absorber element comprising a macro-porous solid support contained within the absorption/desorption tank is as defined in the second aspect, or in any embodiment relating thereto, and therefore is optionally as defined in the first aspect, or in any embodiment relating thereto.

In a fourth aspect, the present invention provides a system comprising a plurality of air purification circuits as defined herein, the system comprising: a common pollutant outlet, a common clean air outlet, and a common inlet; wherein the pollutant outlet, clean air outlet, and inlet of each circuit are suitable for fluid communication with the common pollutant outlet, the common clean air outlet, and the common inlet, respectively.

**In** the context of the present invention, a "common" outlet or inlet refers to an outlet or inlet that is shared, and is therefore suitable for fluidic communication with one or more air purification circuit. Purified air may flow from the absorption/desorption tank into the atmosphere outside the system, such as the cabin of a submarine. Pollutants, such as CO₂, which have been removed from the air, may flow from the absorption/desorption tank into a waste storage system. Preferably, the system may further comprise a means for waste storage suitable for fluid communication with the common pollutant outlet.

The system comprises a plurality of air purification circuits, for example 2, 3, 4, 5, 6, 7, 8, 9, 10, 15, 20, 30, 40, 50, or 100. Although there is no upper limit to the number of air purification circuits, for example at least 2, at least 3, at least 5, at least 10, at least 20, at least 50, or at least 100.

A valve is a device that controls the flow of fluids within a pipe system, such as an air purification circuit, by opening or closing passageways. A valve may be present within a linear passageway in which case it may be either open or close the passageway. A valve may also be present at a convergence between multiple passageways, in which case the valve may provide various configurations of where fluid communication between said passageways are opened or closed.

**In** an air purification circuit which forms part of the system defined herein, fluid communication between the absorption/desorption tank and each one of the common inlet, the common pollutant outlet, and the common clean air outlet may be achieved using by various embodiments using passageways and valves. Preferably, two separate valves are used to open/close fluid communication from the inlet to the absorption/desorption tank and from the absorption/desorption tank to the outlet.

**In** a one embodiment, one or more of, or each of, the air purification circuits comprise the following features: the absorption/desorption tank is connected to: a passageway to the common inlet, the passageway comprising an inlet valve; a passageway to the common pollutant outlet, the passageway comprising a pollutant outlet valve; and a passageway to the common clean air outlet, the passageway comprising an outlet valve. This arrangement allows for each passageway to be independently open or closed depending on the configuration of the relevant valve.

The flow throughout the system, e.g. the flow of air to be purified from the inlet to the absorption/desorption tank, the flow of pollutants from the absorption/desorption tank to the common pollutant outlet, and the flow of clean air from the absorption/desorption tank to the common clean air outlet, may be provided by one or more pumps, such as pressure pumps, compressor pumps, or vacuum pumps. The one or more pumps may be part of the system, or the system may take advantage of pre-existing pumps. Common pumps may be comprised within common aspects of the system, for example, the common inlet may comprise a common inlet pump, such as a compressor pump or a pressure pump; the common pollutant outlet may comprise a common pollutant outlet pump, preferably a vacuum pump; and/or the common clean air outlet may comprise a common clean air outlet pump, preferably a vacuum pump.

Alternatively or additionally, certain pumps may be comprised within one or more air purification circuit. Any of the pumps may be reversible pumps.

Absorption flow through mode may comprise using a pump to encourage airflow from the common foul air inlet to the absorption/desorption tank, and/or using a pump to encourage airflow from the absorption/desorption tank to the common clean air outlet, preferably wherein the flow of air from the common foul air inlet to the absorption/desorption tank is greater than the flow of air from the from the absorption/desorption tank to the common clean air outlet. This may be achieved, for example by using a pump to encourage airflow from the common foul air inlet to the absorption/desorption tank at a relatively higher rate, and using a pump to encourage airflow from the absorption/desorption tank to the common clean air outlet at a relatively lower rate. This may also be achieved, for example by applying physical restrictors to pathways with a desired lower flow, for example, partially closing a relevant valve.

Preferably, the system comprises one or more pumps, wherein the one or more pumps are suitable for flowing air from the common inlet into one or more absorption/desorption tank, from one or more absorption/desorption tank into the common pollutant outlet, and/or from one or more absorption/desorption tank into the common clean air outlet; more preferably: i) the common inlet comprises a pump for flowing air from the common inlet into one or more absorption/desorption tank; ii) the common pollutant outlet comprises a pump for flowing air from one or more absorption/desorption tank into the common pollutant outlet; and/or iii) the common clean air outlet comprises a pump for flowing air from one or more absorption/desorption tank into the common clean air outlet.

In one embodiment, the system comprises two air purification circuits: wherein each circuit comprises an absorption/desorption tank as defined herein, wherein each absorption/desorption tank is connected to the common pollutant outlet via a valve, each absorption/desorption tank is connected to the common clean air outlet via a valve, and each absorption/desorption tank is connected to the common inlet via a valve; and optionally wherein the common pollutant outlet comprises a pump, preferably a vacuum pump.

In one embodiment, one or more of, or each of, the air purification circuits comprise the following features: the absorption/desorption tank comprises: a passageway to the common inlet, the passageway comprising an inlet valve; a passageway to the common pollutant outlet, the passageway comprising a pollutant outlet valve; and a passageway to the common clean air outlet, the passageway comprising an outlet valve. This arrangement allows for each passageway to be independently open or closed depending on the configuration of the relevant valve.

**In** one embodiment, one or more of, or each of, the air purification circuits comprise the following features: the absorption/desorption tank comprises: a passageway to the common inlet, the passageway comprising an inlet valve; and a shared passageway that divides into a passageway to the common pollutant outlet and a passageway to the common clean air outlet. The inlet valve may be open or closed in order to open or close the passageway from the common inlet to the absorption/desorption tank. The shared passageway that divides into a passageway to the common pollutant outlet and a passageway to the common clean air outlet comprises a shared outlet valve at the point of convergence. The position of the shared outlet valve therefore allows fluid communication out of the absorption/desorption tank to be directed to either the common pollutant outlet, the common clean air outlet, or to be closed. This means that the shared section of the passageway may be used for fluidic communication from the absorption/desorption tank to the common clean air outlet or to the common pollutant outlet depending on the configuration of the shared outlet valve. Thus, the shared outlet valve is selectively configurable to:
i) open fluid communication from the absorption/desorption tank to the common clean air outlet, and close fluid communication from the absorption/desorption tank to the common pollutant outlet;
ii) close fluid communication from the absorption/desorption tank to the common clean air outlet, and open fluid communication from the absorption/desorption tank to the common pollutant outlet; or
iii) close fluid communication from the absorption/desorption tank to the common clean air outlet, and close fluid communication from the absorption/desorption tank to the common pollutant outlet.

In one embodiment, one or more of, or each of, the air purification circuits comprise the following features: the absorption/desorption tank comprises: a shared passageway that divides into a passageway to the common inlet, the common pollutant outlet, and the common clean air outlet. The shared passageway that divides into a passageway to the common inlet, a passageway to the common pollutant outlet, and a passageway to the common clean air outlet comprises a common valve at the point of convergence. The position of the common valve therefore allows fluid communication between the absorption/desorption tank to be directed to any one of the common inlet, the common pollutant outlet, the common clean air outlet, or to be closed. This means that the shared section of the passageway may be used for fluidic communication from the absorption/desorption tank to the common clean air outlet or to the common pollutant outlet, or may be used for fluid communication from the common inlet to the absorption/desorption tank, depending on the configuration of the common valve. Thus, the common valve is selectively configurable to:
i) open fluid communication from the absorption/desorption tank to the common clean air outlet, close fluid communication from the absorption/desorption tank to the common pollutant outlet, and close fluid communication from the common inlet to the absorption/desorption tank;
ii) close fluid communication from the absorption/desorption tank to the common clean air outlet, open fluid communication from the absorption/desorption tank to the common pollutant outlet, and close fluid communication from the common inlet to the absorption/desorption tank;
iii) close fluid communication from the absorption/desorption tank to the common clean air outlet, close fluid communication from the absorption/desorption tank to the common pollutant outlet, and open fluid communication from the common inlet to the absorption/desorption tank; or
iv) close fluid communication from the absorption/desorption tank to the common clean air outlet, close fluid communication from the absorption/desorption tank to the common pollutant outlet, and close fluid communication from the common inlet to the absorption/desorption tank.

In one embodiment, one or more of, or each of, the air purification circuits comprise the following features: the absorption/desorption tank comprises: a shared passageway that divides into a passageway to the common inlet, and into a further shared pathway that divides into a passageway to the common pollutant outlet and a passageway to the common clean air outlet. The passageway to the common inlet comprises an inlet valve. The inlet valve may be open or closed in order to open or close the passageway from the common inlet to the absorption/desorption tank. The shared passageway that divides into a passageway to the common pollutant outlet and a passageway to the common clean air outlet comprises a shared outlet valve at the point of convergence. The position of the shared outlet valve therefore allows fluid communication out of the absorption/desorption tank to be directed to either the common pollutant outlet, the common clean air outlet, or to be closed. This means that the shared section of the passageway may be used for fluidic communication from the absorption/desorption tank to the common clean air outlet or to the common pollutant outlet, or may be used for fluid communication from the common inlet to the absorption/desorption tank, and the further shared section of the passageway may be used for fluidic communication from the absorption/desorption tank to the common clean air outlet or to the common pollutant outlet depending on the configurations of the two valve. Thus, the shared outlet valve is selectively configurable to:
i) open fluid communication from the absorption/desorption tank to the common clean air outlet, and close fluid communication from the absorption/desorption tank to the common pollutant outlet;
ii) close fluid communication from the absorption/desorption tank to the common clean air outlet, and open fluid communication from the absorption/desorption tank to the common pollutant outlet; or
iii) close fluid communication from the absorption/desorption tank to the common clean air outlet, and close fluid communication from the absorption/desorption tank to the common pollutant outlet.

The system of the present invention may comprise a plurality of air purification circuits, wherein each air purification circuit is an air purification circuit according to an embodiment as described above, alternatively a combination of these embodiments may be present. Any combination of air purification circuits using any suitable valve topology may be used.

The passageway to the common inlet may comprise an inlet pump; the passageway to the common pollutant outlet may comprise an outlet pump; and/or the passageway to the common clean air outlet may comprise a clean air pump. The configuration of pumps may be the same or different in each circuit. Optionally, one or more of, preferably each of the absorption/desorption tanks comprise a heater and/or a cooler for heating or cooling the absorber element and thus the macro-porous solid support, for example a heat exchanger. A heat exchanger may function as either a heater or a cooler and may make use of pre-existing sources of heat or cooling on a submarine.

Optionally, one or more, preferably each absorber element comprises an absorber element loading sensor configured to sense the loading of the absorber element and/or a sensor which detects or calculates pollutant loading on the selected absorber element. Optionally, one or more of, preferably each of the absorption/desorption tanks comprise a temperature sensor, an air quality sensor, and/or a pressure sensor. Optionally, the system further comprises a timer. Optionally, the system further comprises a control unit for controlling the valves and pumps. Preferably, the sensors and/or timer are configured for communication with the control unit, such that the control unit is able to switch the mode of a circuit within the system in response to input from the sensors and/or in response to by measured elapsed time.

The system may comprise further air purification circuits which make use of alternative absorption elements of the invention, for example, wherein one or more absorption element comprises a liquid amine as the liquid absorbent and wherein one or more other circuits comprise an ionic liquid as the liquid absorbent. Additionally or alternatively, the system may comprise further air purification circuits which make use of alternative types of absorption elements such as a solid or porous absorption media such as a Metal-Organic Framework (MOF), a zeolite, a polymer-based absorbent, Covalent Organic Framework, or a solid amine.

In a fifth aspect, the present invention provides a method of removing pollutants, such as CO₂, from air using a system as defined herein, wherein each air purification circuit is operated in one of the following modes:
a) absorption flow through mode: wherein fluid communication from the common inlet to the absorption/desorption tank is open; fluid communication from the absorption/desorption tank to the common clean air outlet is open; and fluid communication from the absorption/desorption tank to the common pollutant outlet is closed;
b) desorption mode: wherein fluid communication from the common inlet to the absorption/desorption tank is closed; fluid communication from the absorption/desorption tank to the common clean air outlet is closed; and fluid communication from the absorption/desorption tank to the common pollutant outlet is open;
c) absorption mode: wherein fluid communication from the common inlet to the absorption/desorption tank is open; fluid communication from the absorption/desorption tank to the common clean air outlet is closed; and fluid communication from the absorption/desorption tank to the common pollutant outlet is closed; or
d) clean air discharge mode: wherein fluid communication from the common inlet to the absorption/desorption tank is closed; fluid communication from the absorption/desorption tank to the common clean air outlet is open; and fluid communication from the absorption/desorption tank to the common pollutant outlet is closed.

Multiple circuits running different modes, with the capacity to change mode in response to operational conditions and requirements provides significant flexibility and rapid responsiveness to changing conditions on board a submarine. Operational conditions and requirements on board a submarine can change rapidly. This means that a high level of responsiveness is required in the air purification system.

The mode of the circuit depends on the configuration of the one or more valves which open or close fluid communication from the common inlet to the absorption/desorption tank, from the absorption/desorption tank to the common clean air outlet, and from the absorption/desorption tank to the common pollutant outlet. Any combination of the above modes may be used by the system in response to the specific operational needs and/or the conditions of the absorber element.

Preferably, absorption mode further comprises exposing the absorption/desorption tank to increased pressure. Increased pressure is understood to mean a pressure that is higher than the pressure outside of the system, for example, the pressure of the atmosphere in a submarine cabin. Preferably, desorption mode further comprises exposing the absorption/desorption tank to reduced pressure. Reduced pressure is understood to mean a pressure that is lower than the pressure outside of the system, for example, the pressure of the atmosphere in a submarine cabin. Preferably, absorption or absorption flow through mode further comprises cooling the absorption/desorption tank. Cooling is understood to refer to the process of reducing the temperature of the absorption/desorption tank by removing heat energy. Cooling may cause a decrease in temperature or may maintain a stable temperature in order to prevent an increase in temperature. For example, the temperature of the atmosphere in a submarine cabin. Preferably, desorption mode further comprises heating the absorption/desorption tank. Heating is understood to refer to increasing the temperature to a temperature that is higher than the temperature outside of the system, for example, the temperature of the atmosphere in a submarine cabin. Increased or decreased pressure may be achieved for example with a pump, such as a pressure pump, compressor pump, or vacuum pump. Heating or cooling may be achieved by any heating or cooling means, for example a heat exchanger, which may act as either a heating or cooling means. The optimum temperature to encourage absorption, and the optimum temperature to encourage desorption, will both depend on the type of liquid absorbent.

There are multiple sources of heat on a submarine which can be utilised to provide the heat required for the desorption mode. Such heat sources include heated water or steam from the secondary reactor loops, heated coolant water from diesel engines, or heated coolant water from the electric motors. Vacuum pumps can be large, noisy and inefficient. Utilisation of the vacuum system already present and running on a submarine makes use of this resource without adding any additional cost, volume or energy burden onto the scrubber system. This is an advantage available to CO₂ removal systems on submarines that is not available to CO₂ scrubbers in other applications.

Preferably, each air purification circuit is operated in either:
a) absorption flow through mode: wherein fluid communication from the common inlet to the absorption/desorption tank is open; fluid communication from the absorption/desorption tank to the common clean air outlet is open; and fluid communication from the absorption/desorption tank to the common pollutant outlet is closed; or
b) desorption mode: wherein fluid communication from the common inlet to the absorption/desorption tank is closed; fluid communication from the absorption/desorption tank to the common clean air outlet is closed; and fluid communication from the absorption/desorption tank to the common pollutant outlet is open.

In one example, one circuit is in absorption mode or absorption flow through mode and another circuit is in desorption mode, preferably the method further comprises switching the circuit in absorption mode or absorption flow through mode to desorption mode and simultaneously switching the circuit in desorption mode to absorption mode or absorption flow through mode. This is particularly useful in a system having two air purification circuits, such that absorption may be maintained continuously in at least one circuit. Alternatively, in a system having two air purification circuits, both circuits will operate in absorption mode or absorption flow through mode simultaneously, and each circuit will independently switch to desorption mode as is necessary to maintain the activity of the absorber element comprising a macro-porous solid support, and then switch back to absorption mode or absorption flow through mode, such that at no stage are both circuits in desorption mode simultaneously.

In one example, the absorption/desorption tank of the circuit in absorption mode or absorption flow through mode is exposed to increased pressure, and the absorption/desorption tank of the circuit in desorption mode is exposed to reduced pressure.

In one example, desorption mode further comprises heating the absorber element comprising a macro-porous solid support, alternatively or additionally, absorption mode or absorption flow through mode further comprises cooling the absorber element comprising a macro-porous solid support.

Preferably, the method comprises taking readings from one or more sensors within the system, for example a temperature sensor, an air quality sensor, and/or a pressure sensor, inputting the readings to a control unit, and the control unit changing the mode of operation of one or more of the circuits in response to the input from the sensors. Preferably, the method comprises measuring elapsed time using a timer and changing the mode of operation of one or more of the circuits in response to elapsed time.

In a sixth aspect, the present invention provides a method of retrofitting a circuit as defined herein, or a system as defined herein, into a submarine atmospheric control system.

For example, retrofitting a circuit or system as defined in herein into a submarine atmospheric control system may comprise connecting the circuit or system to pre-existing pumps, vacuum pumps, heating means, cooling means, and/or heat exchangers within the atmospheric control system.

For example, retrofitting a circuit as defined herein may comprise retrofitting the circuit into a system as defined herein, or any other system comprising one or more air purification circuits.

In a seventh aspect, the present invention provides a submarine comprising one or more absorber element as defined herein, one or more absorption/desorption tank as defined herein, one or more circuit as defined herein, or one or more system as defined herein.

The invention will now be described with reference to the figures. The figures represent nonlimiting examples of the present invention.

To prepare a liquid-infused solid absorber element, a suitable macro-porous solid support is first prepared. This solid support may be inherently macro-porous (for example but not limited to: diatomaceous earth) or have manufactured porosity (for example, but not limited to: by 3D printing, subtractive manufacturing, foaming processing, packed bed structure). The macro-porous structure should be chosen in such a way as to allow ready air-flow through the structure and provide the maximum amount of surface area per unit volume.

If the chosen solid substrate does not have sufficient surface roughness, a roughening process should be undertaken to allow capture of the active liquid chemistry. The roughening process will depend upon the nature and structure of the substrate used, but may involve chemical etching, physical etching, thermal activation, or other similar methods.

The combination of solid support and active liquid chemistry should be chosen so that the liquid absorbent (such as liquid amine or ionic liquid) forms a stable film on at least part of the interior surfaces of the macropores. Once the support is prepared, the liquid chemistry can be added to the support. Liquid retention can be achieved by capillary forces, hydrogen bonding, or electrostatic interactions, for example. A particular advantage of this invention is that the volume of active chemistry required for operation is minimised, as all the active absorber sites are present at a surface or within a short diffusion distance (i.e. at or close to the gas/liquid interface).

As the liquid absorbent (such as liquid amine or ionic liquid) may be applied during manufacture, slower or more energy intensive processes can be used to flow the chemistry to the surface sites. This allows the use of highly viscous or difficult-to-flow liquid absorbent that reduce liquid escape into the air stream but would otherwise be unusable in a traditional liquid absorber system.

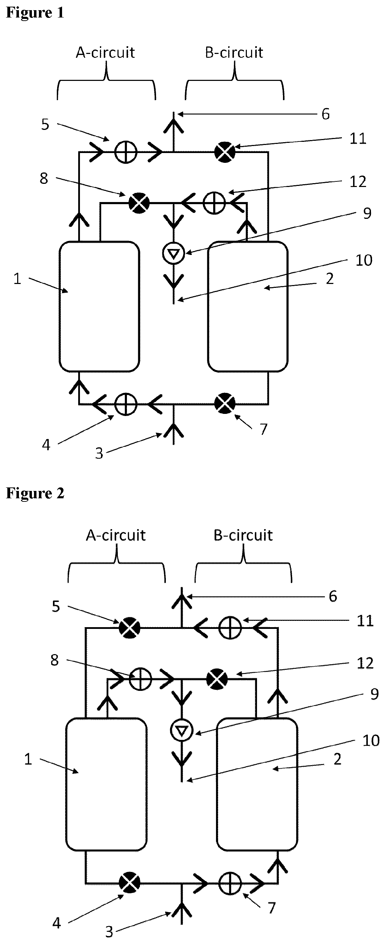

Figure 1 shows a system comprising two air purification circuits, A-circuit and B-circuit. The solid support infused with the active chemistry is enclosed in an absorber/desorber module within a tank (1, 2). The A-circuit is in absorption flow through mode and the B-circuit is in desorption mode. Absorption flow through mode for the A-circuit: Air containing CO₂ and / or other pollutants enters via inlet (3); valve (4) is open to the airflow and valve (7) is closed to the airflow, causing the air to flow into absorption/desorption tank (1); CO₂ is removed from the air in absorption/desorption tank (1); valve (5) is opened to allow the clean air to flow out of clean air outlet (6); the removed CO₂ is retained in absorption/desorption tank (1); valve (8) is closed to prevent clean air flowing into waste outlet (10). Desorption mode for the B-circuit: valve (7) is closed preventing air from entering absorption/desorption tank (2); valve (12) is opened to allow gas flow between absorption/desorption tank (2) and outlet (10); a vacuum is applied to absorption/desorption tank (2) by vacuum pump (9) to enhance desorption; extracted CO₂ exits absorption/desorption tank (2), passes through valve (8) and exits the system via outlet (10); valve 11 is closed to prevent CO₂ from exiting into the clean air outlet (6).

With the solid support infused with the active chemistry it can then be enclosed in an absorber/desorber module within a tank (1, 2). Once prepared, the module operates similarly to a solid absorber/desorber system, rather than a traditional liquid system.

In operation, an absorption/desorption tank (1, 2) includes an absorber module (containing the liquid infused solid) which is transitioned between two modes: (a) absorption flow through mode and (b) desorption mode.

### (a) Absorption mode:

In absorption mode and absorption flow through mode, the active chemistry binds or associates preferentially with CO₂ molecules in the air compared to Nitrogen, Oxygen, H₂O, or other air constituents. This traps and holds on to CO₂ until the absorber liquid absorbent is saturated and cannot bind any further CO₂. By operating at high pressure, large amounts of CO₂ can be bound.

### (b) Desorption mode:

In desorption mode, the pressure is released, causing the bound CO₂ to desorb from the active chemistry and flow out of the system as a CO₂-enriched gas. A pump may be used to create lower pressure to encourage bound CO₂ to desorb from the active chemistry and flow out of the system as a CO₂-enriched gas.

Figure 2 shows the system from figure 1 with the modes reversed, with the B-circuit in absorption flow through mode and the A-circuit in desorption mode. Absorption flow through mode for the B-circuit: Air containing CO₂ and / or other pollutants enters via inlet (3); valve (7) is open to the airflow and valve (4) is closed to the airflow, causing the air to flow into absorption/desorption tank (2); CO₂ is removed from the air in absorption/desorption tank (2); valve (11) is opened to allow the clean air to flow out of clean air outlet (6); the removed CO₂ is retained in absorption/desorption tank (2) ; valve (12) is closed to prevent clean air flowing into waste outlet (10). Desorption mode for the A-circuit: valve (4) is closed preventing air from entering absorption/desorption tank (1); valve (8) is opened to allow gas flow between absorption/desorption tank (1) and outlet (10); a vacuum is applied to absorption/desorption tank (1) by vacuum pump (9) to enhance desorption; extracted CO₂ exits absorption/desorption tank (1), passes through valve (8) and exits the system via outlet (10); valve (5) is closed to prevent CO₂ from exiting into the clean air outlet (6).

Figure 3 shows a conceptual illustration of the liquid absorbent (114) on the exposed surfaces of a solid support (113), through which a macropore exists (115). Incoming CO₂-rich foul air (117) flows through the macropore, CO₂ from the foul air is absorbed (116) into the liquid absorbent at the surface. Clean air then passes through the system to exit (118).

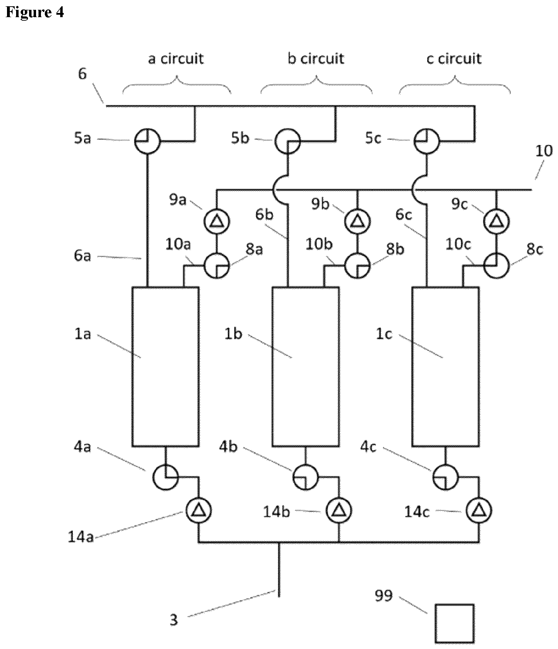

Figure 4 shows an example of three interconnected air purification circuits (a, b, c). The a-circuit is in absorption mode, the b-circuit is in clean air discharge mode and the c-circuit is in desorption mode. For simplicity, the internal elements of the absorption/desorption tanks (1a, 1b, 1c) are not shown. In the illustrated embodiment, one foul air input pump is used per circuit; in alternative embodiments, a single pump may be shared between all circuits or foul air inlets pumps may be shared between one or more circuits. The a-circuit, which is in absorption mode, has foul air inlet valve (4a) open to allow foul air to be pumped into absorption/desorption tank (1a) using foul air input pump (14a). Clean air discharge valve (5a) and pollutant discharge valve (8a) are both closed, ensuring that pressure can build up within absorption/desorption tank 1a. The b-circuit, which is in clean air discharge mode, has foul air inlet valve (4b) closed to prevent the ingress of foul air and pollutant discharge valve (8b) closed to prevent the egress of clean air through the incorrect channel. Clean air discharge valve (5b) is open to allow clean air to egress via clean air outlet (6b - 6). In an additional embodiment, a further pump may be placed on the common clean air outlet (6) or the circuit-specific clean air outlets (6a, 6b, 6c) to assist with clean air egress. The c-circuit, which is in desorption mode, has both foul air inlet valve (4c) closed and clean air discharge valve (5c) closed to prevent the egress of pollutants through the incorrect channel. Pollutant discharge valve (8c) is opened and pollutant pump (9c) is activated to desorb the absorption media in the way previously discussed. Desorbed pollutant egresses from absorption/desorption tank (1c) to common pollutant outlet (10) via circuit pollutant outlet (10c), valve (8c) and circuit pollutant pump (9c). The system optionally further comprises a control unit (99) for controlling the valves and pumps.

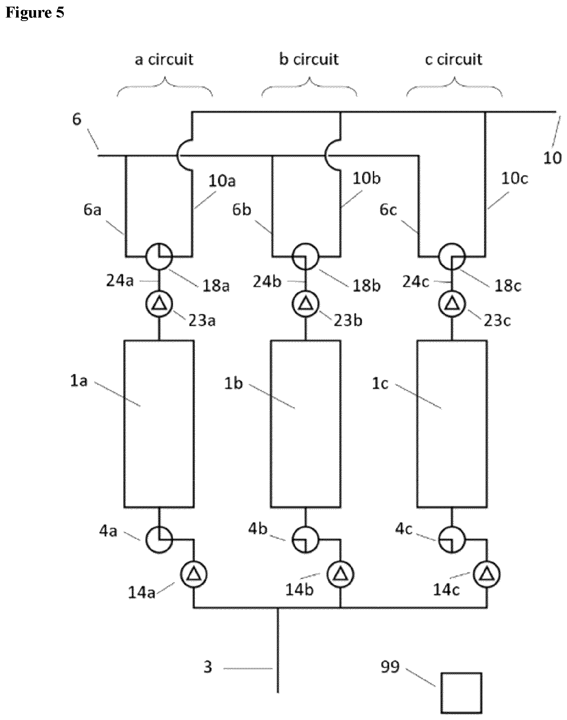

Figure 5 shows an alternative example of three interconnected air purification circuits. The a-circuit is in absorption mode, the b-circuit is in clean air discharge mode and the c-circuit is in desorption mode. For simplicity, the internals of the absorption/desorption tanks (1a, 1b, 1c) are not shown. In the illustrated embodiment, a single foul air inlet pump is used; in alternative embodiments, one foul air inlet pump per circuit may be used or foul air inlets pumps may be shared between circuits. Multipurpose valves (18a, 18b, 18c) may be in one of three positions: clean air discharge position, whereby absorption/desorption tank discharge line (24a, 24b, 24c) is connected to circuit clean air outlet (6a, 6b, 6c); desorption position, whereby absorption/desorption tank discharge line (24a, 24b, 24c) is connected to the relevant circuit pollutant outlet (10a, 10b, 10c); and sealed position, whereby the valve blocks egress from the corresponding absorption/desorption chamber, this mode may be used when the corresponding circuit is in absorption mode. The a-circuit, which is in absorption mode, has foul air inlet valve (4a) open to allow foul air to be pumped into absorption/desorption tank (1a) using foul air input pump (14a). Valve (18a) is in its sealed position and vacuum pump (23a) is deactivated, allowing pressure to build up within absorption/desorption tank (1a). The b-circuit, which is in clean air discharge mode, has foul air inlet valve (4b) closed to prevent the ingress of foul air and to prevent the egress of clean air through the incorrect channel. Valve (18b) is set in its clean air discharge position, allowing clean air to discharge via circuit clean air outlet (6b) into common clean air outlet (6), assisted by vacuum pump (23b). The c-circuit, which is in desorption mode, has foul air inlet valve (4c) closed to prevent the egress of pollutants through the incorrect channel. Valve (18c) is set in its desorption position, allowing desorbed pollutant to discharge via circuit pollutant outlet (10c) into common pollution outlet (10), assisted by vacuum pump (23c). The system optionally further comprises a control unit (99) for controlling the valves and pumps.

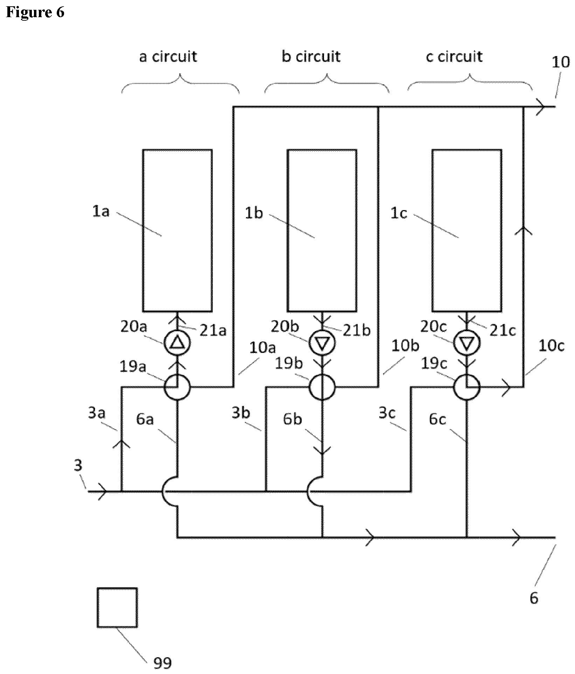

Figure 6 shows a further alternative example of three interconnected air purification circuits. The a-circuit is in absorption mode, the b-circuit is in clean air discharge mode and the c-circuit is in desorption mode. For simplicity, the internals of the absorption/desorption tanks (1a, 1b, 1c) are not shown. Common valves (19a, 19b, 19c) may be in one of four positions: foul air input position, whereby foul air circuit inlet (3a, 3b, 3c) is connected to corresponding common pump (20a, 20b, 20c); clean air discharge position, whereby circuit clean air outlet (6a, 6b, 6c) is connected to corresponding common pump (20a, 20b, 20c); desorption position, whereby circuit pollutant outlet (10a, 10b, 10c) is connected to corresponding common pump (20a, 20b, 20c); and sealed, whereby the valve blocks intake and exhaust to the corresponding absorption/desorption chamber, thereby isolating that circuit. The a-circuit, which is in absorption mode, has common valve (19a) set to foul air input position, allowing common pump (20a) to pump in foul air to absorption/desorption tank (1a) via circuit foul air inlet (3a) and common foul air inlet (3). The b-circuit, which is in clean air discharge mode, has common valve (19b) set to clean air discharge position, allowing common pump (20b) to pump clean air from absorption/desorption tank (1b) to common clean air outlet (6) via circuit clean air outlet (6b). The c-circuit, which is in desorption mode, has common valve (19c) set to desorption position, allowing common pump (20c) to pump pollutant from absorption/desorption tank (1c) to common pollutant outlet (10) via circuit pollutant outlet (10c). In this embodiment, common inlet / outlet (21a, 21b, 21c) provides a single channel into / out from absorption/desorption tank (1a, 1b, 1c). The system optionally further comprises a control unit (99) for controlling the valves and pumps.

As the liquid absorbent remains a liquid (albeit a mostly-immobile liquid), diffusion can still occur through the liquid film. This means that unlike a solid system, CO₂ absorbing capacity beyond the very surface layer can still be accessed, further increasing capacity beyond that given by the already high surface area. In addition, if there are any geometric changes to the active liquid during CO₂ absorption (for example, expansion, such as thermal expansion, or contraction) then a liquid film is inherently more robust to these changes than a solid support, as slight changes in volume can easily be accommodated without risk of fatigue or fracture.

The size of macropore total volume of support, flow pathways through the support, liquid absorbent type and volume can all be tuned to meet the needs of the particular installation. An advantage of this invention is that within a given geometry, many configurations are possible in order to optimise the system for a particular use case.

Once the liquid absorbent (such as liquid amine or ionic liquid) is saturated with CO₂ and the system is switched to desorption, the CO₂ can be evolved. This could be via a reduction in operating pressure (thus lowering the solubility of the CO₂ and promoting desorption back into the gas stream). In addition, this invention allows for the implementation of alternative or complimentary desorption approaches. For example, a thermally-conductive solid substrate can be used to deliver heat to the active chemistry to promote desorption. If an electrochemically-active system is used, a substrate can also act as an electrode.

At end-of-life for an absorber module, this invention enables multiple usage scenarios. The particular arrangement may allow for on-site exchange and re-charging of the active liquid, or this process may be better suited for a return-to-factory reconditioning. Lost active chemistry can be topped up, or the active chemistry could be removed via a solvent ready for the addition of a new thin-film coating.

The nature of the infused surface approach means that advancements in chemistry, or a changing use case can be accommodated by a change in chemistry, whilst keeping the solid components intact. This reduces the time and cost impact of developing a new system for each new chemistry, if a common chassis can be used.

## Claims

1. An absorber element comprising a macro-porous solid support (113), wherein the macro-porous solid support (113) comprises a surface roughness that is infused with a liquid absorbent (114) such that the liquid absorbent (114) forms a stable film on at least part of the interior surfaces of the macropores (115).

2. The absorber element of Claim 1, wherein the liquid absorbent (114) is either a liquid amine or an ionic liquid.

3. The absorber element of Claim 1 or Claim 2, wherein:
a) the macro-porous solid support (113) is inherently macro-porous, preferably wherein the macro-porous solid support (113) comprises diatomaceous earth; and/or
b) the macro-porous solid support (113) comprises manufactured porosity, preferably wherein the manufactured porosity is derived from 3D printing, subtractive manufacturing, foaming processing, a packed bed structure, chemical etching, physical etching, and/or thermal activation.

4. An absorption/desorption tank (1, 2) suitable for use in an air purification circuit, containing an absorber element comprising a macro-porous solid support (113) wherein the macro-porous solid support (113) comprises a surface roughness that is suitable for infusion with a liquid absorbent (114) such that the liquid absorbent (114) may form a stable film on at least part of the interior surfaces of the macropores (115), wherein the absorption/desorption tank comprises at least one aperture.

5. The absorption/desorption tank of Claim 4, wherein the absorber element is defined according to any one of Claims 1 to 3.

6. An air purification circuit comprising:
a) an absorption/desorption tank (1, 2) as defined according to Claim 4 or Claim 5;
b) a pollutant outlet, a clean air outlet, and an inlet; and
c) one or more valves (4, 5, 7, 8, 11, 12, 18, 20) which allow fluid communication between the absorption/desorption tank (1, 2) and each one of the inlet, the pollutant outlet, and the clean air outlet to be either opened or closed.

7. The air purification circuit of Claim 6, further comprising one or more pump, preferably one or more vacuum pump (9, 23) and/or one or more pressure pump.

8. A system comprising a plurality of air purification circuits according to Claim 7, the system comprising: a common pollutant outlet (10), a common clean air outlet (6), and a common inlet (3); wherein the pollutant outlet, clean air outlet, and inlet of each circuit are suitable for fluid communication with the common pollutant outlet (10), the common clean air outlet (6), and the common inlet (3), respectively.

9. The system of Claim 8, comprising two air purification circuits:
wherein each circuit comprises an absorption/desorption tank (1, 2) comprising an absorber element comprising a macro-porous solid support (113), wherein each absorption/desorption tank (1, 2) is connected to the common pollutant outlet (10) via a valve (8, 12), each absorption/desorption tank (1, 2) is connected to the common clean air outlet (6) via a valve (5, 11), and each absorption/desorption tank (1, 2) is connected to the common inlet (3) via a valve (4, 7);
optionally wherein the common pollutant outlet (10) comprises a pump, preferably a vacuum pump (9).

10. The system of Claim 8 or claim 9, wherein:
one or more of, preferably each of the absorption/desorption tanks (1, 2) comprises a heater and/or a cooler for heating or cooling the absorber element comprising the macro-porous solid support (113), for example a heat exchanger;
one or more, preferably each absorber element comprises one or more sensor selected from an absorber element loading sensor configured to sense the loading of the absorber element and/or a sensor which detects or calculates pollutant loading on the selected absorber element, a temperature sensor, an air quality sensor, and/or a pressure sensor; and/or
the system further comprises a timer;
the system further comprises a control unit (99) for controlling the valves and pumps; preferably wherein the sensors and/or timer are configured for communication with the control unit (99), such that the control unit (99) is able to switch the mode of a circuit within the system in response to input from the sensors and/or in response to by measured elapsed time.

11. A method of removing pollutants, such as CO₂, from air (117) using a system according to any one of Claims 8 to 10, wherein each air purification circuit is operated in one of the following modes:
a) absorption flow through mode: wherein fluid communication from the common inlet (3) to the absorption/desorption tank (1, 2) is open; fluid communication from the absorption/desorption tank (1, 2) to the common clean air outlet (6) is open; and fluid communication from the absorption/desorption tank (1, 2) to the common pollutant outlet (10) is closed;
b) desorption mode: wherein fluid communication from the common inlet (3) to the absorption/desorption tank (1, 2) is closed; fluid communication from the absorption/desorption tank (1, 2) to the common clean air outlet (6) is closed; and fluid communication from the absorption/desorption tank (1, 2) to the common pollutant outlet (10) is open;
c) absorption mode: wherein fluid communication from the common inlet (3) to the absorption/desorption tank (1, 2) is open; fluid communication from the absorption/desorption tank (1, 2) to the common clean air outlet (6) is closed; and fluid communication from the absorption/desorption tank (1, 2) to the common pollutant outlet (10) is closed; or
d) clean air discharge mode: wherein fluid communication from the common inlet (3) to the absorption/desorption tank (1, 2) is closed; fluid communication from the absorption/desorption tank (1, 2) to the common clean air outlet (6) is open; and fluid communication from the absorption/desorption tank (1, 2) to the common pollutant outlet (10) is closed.

12. The method of Claim 11, wherein each air purification circuit is operated in either mode a) or mode b).

13. The method of Claim 11 or Claim 12, wherein one or more of:
a) the system is a system of Claim 9 or any claim dependent thereon, and wherein one air purification circuit is operated in mode a), and the other air purification circuit is operated in mode b);
b) absorption mode or absorption flow through mode further comprises exposing the absorption/desorption tank (1) to increased pressure, and/or desorption mode further comprises exposing the absorption/desorption tank (2) to reduced pressure; and/or
c) desorption mode further comprises heating the absorber element comprising a macro-porous solid support (113), and/or wherein absorption mode or absorption flow through mode further comprises cooling the absorber element comprising a macro-porous solid support (113).

14. A method of retrofitting a circuit as defined in Claim 6 or Claim 7, or a system as defined in any one of Claims 8 to 10, into a submarine atmospheric control system.

15. A submarine comprising one or more absorber element as defined in any one of Claims 1 to 3, one or more absorption/desorption tank as defined in Claim 4 or Claim 5, one or more circuit as defined in Claim 6 or Claim 7, or one or more system as defined in any one of Claims 8 to 10.
